# FASCICULE DE BREVET EUROPEEN

(11) **EP 1 040 142 B1**
(45) Date de publication et mention de la délivrance du brevet: **23.06.2004**
(21) Numéro de dépôt: 98958975.9
(22) Date de dépôt: 08.12.1998
(51) Int. Cl.: C08F 20/12, C09J 133/06

(54) **UTILISATION D'UNE EMULSION ADHESIVE AQUEUSE SENSIBLE A LA PRESSION (PSA), POSSEDANT UNE RESISTANCE AU CISAILLEMENT ELEVEE**
VERWENDUNG EINER WÄSSRIGEN DRUCKEMPFINDLICHEN KLEBSTOFF-EMULSION MIT HOHER SCHERFESTIGKEIT
USE OF AN AQUEOUS PRESSURE SENSITIVE ADHESIVE (PSA) EMULSION, WITH HIGH SHEARING RESISTANCE

(30) Priorité: 08.12.1997 FR 9715499
(43) Date de publication de la demande: 04.10.2000
(73) Titulaire: RHODIA CHIMIE, 92408 Courbevoie Cédex (FR)
(72) Inventeur: SCHOONBROOD, Harold, Fitzroy North, VIC 3068 (AU); OGER, Nicole, F-92000 Nanterre (FR); LOUBET, Olivier, F-69003 Lyon (FR)
(86) Numéro de dépôt international: PCT/FR1998/002652
(87) Numéro de publication internationale: WO 1999/029746

(56) Documents cités:
- EP-A- 0 086 889
- WO-A-97/11996
- DE-B- 1 176 863

## Description

La présente invention a pour objet l'utilisation d'émulsions adhésives aqueuses à base d'au moins un polymère (méth)acrylique possédant une résistance au cisaillement significativement augmentée

Plus précisément, la présente invention se rapporte au domaine des émulsions dites adhésives sensibles à la pression (PSA) à base de polymères acryliques.

De manière générale, ces émulsions sont enduites à la surface d'une grande variété de matériaux de façon à obtenir des étiquettes, des rubans ou tout autre matériau autocollant, en vue de leur conférer la faculté d'adhérer à la surface d'un support, sans nécessiter une autre activation qu'une faible pression.

Comme signalé précédemment, ces émulsions dites émulsions adhésives sensibles à la pression (PSA) dérivent de polymères acryliques.

Classiquement, les PSA sont obtenues par polymérisation majoritairement de monomères acrylates d'alkyle qui sont généralement présents à raison de 50 à environ 99 % et de préférence à raison de 80 à 99 % en poids et de monomères polaires copolymérisables comme par exemple de l'acide acrylique, en proportions plus réduites.

Les monomères, mis en oeuvre pour préparer les PSA, sont sélectionnés en fonction de leur température de transition vitreuse, Tg, pour conférer aux polymères les incorporant, le comportement attendu en termes d'adhérence et de viscoélasticité.

C'est ainsi que pour présenter une bonne balance entre la viscoélasticité et l'adhérence, les monomères doivent posséder une température de transition vitreuse suffisamment basse.

En conséquence, la plupart des PSA sont constituées d'esters acryliques qui conduisent à des polymères mous adhésifs et possédant de basses températures de transition vitreuse. Cette température de transition vitreuse est généralement comprise entre -70 et -10 °C et de préférence est inférieure à -30 °C.

Toutefois, il serait également particulièrement avantageux de disposer de PSA ayant une résistance au cisaillement élevée car celle-ci facilite considérablement la manipulation et la transformation des matériaux à la surface desquels elles sont enduites. Or, généralement la résistance au cisaillement est détériorée lorsque la température de transition vitreuse diminue.

De manière inattendue, les inventeurs ont mis en évidence qu'il était possible d'améliorer significativement la résistance au cisaillement des PSA sans pour autant affecter leur pouvoir adhésif, en intervenant au niveau de leur procédé de préparation.

Le procédé de préparation des PSA, considéré selon la présente invention, met en oeuvre une polymérisation en émulsion par voir radicalaire à pression atmosphérique et à une température généralement comprise entre 10 et 90°C, des monomères correspondants.

Classiquement, cette technique de polymérisation requiert, outre l'initiateur radicalaire, un mélange d'émulsifiants anioniques et/ou non ioniques pour stabiliser ladite émulsion.

Avantageusement, il s'avère possible, en substituant, aux mélanges d'émulsifiants classiques à base généralement d'alkylphénol, un ou plusieurs dérivé(s) d'alcool(s) gras polyalkoxylé(s), d'accroître significativement la résistance au cisaillement des PSA obtenues à l'issue de la polymérisation.

De manière surprenante, les PSA obtenues à l'issue du procédé de préparation revendiqué présentent une résistance au cisaillement significativement améliorée sans préjudice de leur pouvoir adhésif.

Ce résultat est particulièrement avantageux à plusieurs titres.

Tout d'abord, on peut désormais envisager l'emploi, pour la préparation des PSA, de monomères (méth)acrylate d'alkyle possédant une température de transition vitreuse considérée jusqu'ici trop basse pour conduire à une résistance au cisaillement suffisante.

Par ailleurs, il s'avère possible d'optimiser les qualités des monomères convenant déjà à cette application dans la mesure où ils conduisent, en présence de l'émulsifiant selon l'invention, à une PSA possédant une résistance au cisaillement supérieure à celle naturellement attendue.

En conséquence, la présente invention a pour objet principal l'utilisation de l'émulsion obtenue par polymérisation en émulsion aqueuse radicalaire de monomères comprenant des monomères (méth)acrylates d'alkyle présents à raison de 50 à environ 99 % en poids par rapport au poids en monomères présents dans l'émulsion, en présence d'au moins un émulsifiant composé d'au moins un dérivé non ionique ou an ionique d'un alcool gras, linéaire ou ramifié, polyalkoxylé;
à titre d'émulsion adhésive aqueuse sensible à la pression (PSA), possédant une résistance au cisaillement significativement augmentée.

Cette augmentation en résistance au cisaillement est en fait appréciée comparativement à la résistance au cisaillement d'une PSA obtenue par polymérisation en émulsion radicalaire, en présence d'un émulsifiant classique de type alkylphénol éthoxylés/alkylphénol éthoxylés sulfatés.

La substitution d'un émulsifiant comme défini ci-dessus, par un émulsifiant conforme à l'invention conduit à une augmentation de la résistance au cisaillement de la PSA correspondante, sans affecter en contrepartie son pouvoir adhésif qui demeure pratiquement constant en cours du temps.

Avantageusement, la résistance au cisaillement peut être au moins multipliée d'un facteur 2 selon le procédé revendiqué. De même on peut également observer des augmentations encore plus significatives, d'un facteur de 50 par exemple. Cette augmentation de la résistance au cisaillement obtenue selon l'invention est en particulier illustrée dans les exemples 3 et 6 soumis ci-après.

Par ailleurs, l'émulsifiant utilisé selon l'invention répond de manière satisfaisante aux récentes exigences en termes d'homologation alimentaire et de réglementation environnementale.

Ceci constitué un second avantage de l'émulsifiant préconisé selon l'invention au regard des mélanges alkylphénol éthoxylés, sulfatés ou non conventionnels.

En ce qui concerne l'émulsifiant conforme à la présente invention. il comprend au moins un dérivé, non ionique ou anionique, d'un alcool gras linéaire ou ramifié polyalkoxylé.

De préférence, ce dérivé d'alcool gras polyalkoxylé répond à la formule générale

CH₃-(CHR₁)ₙ-CH₂O-(CH₂-CH₂O)ₓ -R₂

avec
R₁ représentant un atome d'hydrogène ou un groupement alkyle en C₁ à C₄,
R₂ représentant un atome d'hydrogène ou un groupement SO₄ M avec M représentant un métal alcalin et de préférence un atome de sodium,
n étant compris entre 1 et 16 et
x étant compris entre 10 et 100.

Plus préférentiellement, R1 est un atome d'hydrogène, n est compris entre 10 et 12 et x est compris entre 20 et 50.

Selon un mode privilégié de l'invention, l'émulsifiant est constitué d'un ou plusieurs dérivés d'alcools gras tels que définis précédemment anionique et/ou non ionique.

Plus préférentiellement, il s'agit d'un mélange d'au moins deux dérivés d'alcool gras polyalkoxylés, anionique(s) et/ou non ionique(s), tels que définis précédemment. De préférence, l'un se trouve sous une forme anionique et l'autre sous une forme non ionique.

A titre représentatif de cet émulsifiant on peut tout particulièrement cité celui composé de deux alcools lauryles polyéthoxylés avec des indices éthoxy respectivement de l'ordre de 20 et de 50, l'un se trouvant sous une forme sulfatée et l'autre non.

Cet émulsifiant est utilisé à raison d'environ 1 à 10% en poids, de préférence d'environ 2 à environ 5% en poids de matière sèche du poids total en monomères.

De manière conventionnelle, l'émulsifiant proposé selon l'invention est mis en oeuvre lors de la polymérisation en émulsion par voie radicalaire des monomères considérés.

Plus précisément, ces monomères sont choisis dans le groupe constitué de :
- l'acrylate de méthyle, l'acrylate d'éthyle, l'acrylate de propyle, l'acrylate de n-butyle, l'acrylate d'isobutyle, l'acrylate de 2-éthylehexyle, l'acrylate de tert-butyle, l'acrylate d'hexyle, l'acrylate d'heptyle, l'acrylate d'octyle, l'acrylate d'iso-octyle, l'acrylate de décyle, l'acrylate de dodécyle, le méthacrylate de méthyle, le méthacrylate d'éthyle, le méthacrylate de n-butyle, le méthacrylate d'isobutyle ;
- et leurs mélanges.

Les monomères mis en oeuvre dans la polymérisation en émulsion sont des monomères (méth)acrylates d'alkyle, présents à raison de 50% à environ 99% et de préférence à raison de 80 % à 99 % en poids par rapport au poids en monomères présents dans l'émulsion.

Ces monomères acrylates d'alkyles possèdent de préférence 4 à environ 8 atomes de carbone dans la chaine alkyle car ils correspondent au meilleur compromis en terme de dureté et d'adhérence.

Plus préférentiellement, ils sont choisis parmi l'acrylate de 2-éthylehexyle, l'acrylate de butyle, l'acrylate d'hexyle, l'acrylate d'heptyle, l'acrylate d'octyle, l'acrylate d'iso-octyle, l'acrylate de décyle, l'acrylate d'isobutyle, l'acrylate de dodécyle ou de leurs mélanges. Les méthacrylates peuvent également être utilisés comme le méthacrylate de n-butyle.

Conviennent plus particulièrement à l'invention l'acrylate de 2 - éthylehexyle et ses mélanges.

La polymérisation en émulsion, peut en outre. mettre en oeuvre au moins un monomère éthyléniquement insaturé, copolymérisable avec les monomères identifiés précédemment et qui est choisi dans le groupe constitué par
- les acides mono- et di- carboxyliques insaturés éthyléniques comme l'acide acrylique, l'acide méthacrylique, l'acide itaconique, l'acide maléique, l'acide fumarique et les mono- et di-alkylesters des acides mono- et di-carboxyliques du type cité avec les alcanols ayant de préférence 1 à 8 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides.
- les monomères éthyléniques comportant un groupe acide sulfonique et ses sels alcalins ou d'ammonium par exemple l'acide vinylsulfonique, l'acide vinylbenzènesulfonique, l'acide alpha-acrylamido méthylpropane-sulfonique, le 2-sulfoéthylène-méthacrylate,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou diméthylaminoéthyl-méthacrylate, le ditertiobutylaminoéthyl-acrylate ou le ditertiobutylaminoéthyl-méthacrylate, le diméthylaminométhyl-acrylamide ou diméthylaminométhyl-méthacrylamide,
- les monomères zwitterioniques comme par exemple l'acrylate de sulfopropyl(diméthyl)aminopropyle
- et leurs mélanges.

De préférence, il s'agit de l'acide méthacrylique, l'acide acrylique, l'acide itaconique l'acide maléique et/ou l'acrylamide. Ces monomères sont avantageux en terme de pouvoir adhésif, principalement adhésion par pelage et de résistance au cisaillement.

De même la polymérisation peut être effectuée en présence d'au moins un monomère dit agent de réticulation. Il s'agit d'un monomère portant au moins deux groupements réactifs en polymérisation radicalaire. A titre illustratif de ce type de monomère on peut notamment citer le diméthacrylate d'alkyldiol et le divinylbenzène.

De préférence, les monomères mis en oeuvre dans l'émulsion sont choisis parmi l'acrylate de 2-éthylehexyle, l'acrylate de butyle, l'acrylate d'hexyle, l'acrylate d'heptyle, l'acrylate d'octyle, l'acrylate d'iso-octyle, l'acrylate de décyle, l'acrylate d'isobutyle, l'acrylate de dodécyle, l'acide méthacrylique, l'acide acrylique, l'acide itaconique, l'acide maléique et l'acrylamide.

Plus préférentiellement, les PSA sont obtenues par polymérisation majoritairement de monomères acrylates d'alkyle comme l'acrylate de 2-éthylehexyle présents à raison de 50 à environ 99 % et de préférence à raison de 80 à 99 % en poids par rapport au poids en monomères dans l'émulsion, en mélange avec un ou plusieurs monomères polaires copolymérisables annexes de type acide acrylique par exemple.

La polymérisation en émulsion des monomères est réalisée en présence d'au moins un initiateur radicalaire et le cas échéant, d'un agent de transfert, avec une concentration en monomères comprise entre environ 20 et 75 % en poids de l'émulsion. Les monomères peuvent être introduits sous forme d'une préémulsion dans le milieu réactionnel.

Tout type d'initiateur ou amorceur à radicaux libres habituels dans la polymérisation en émulsion peut convenir. Des exemples d'initiateurs comprennent les hydroperoxydes tels que l'eau oxygénée, l'hydroperoxyde de diisopropylbenzène, les persulfates de sodium, de potassium ou d'ammonium, et les initiateurs cationiques comme l'azobis (isobutyronitrile) le 4-4'azobis (acide 4-cyano valérique).

Ces initiateurs peuvent être associés à un réducteur comme par exemple le bisulfite.

La quantité en initiateur(s) se situe en général entre 0.05 et 2 % en poids par rapport à la quantité des monomères.

L'emploi simultané d'un agent de transfert connu tel que par exemple un mercaptan est également possible.

La température de polymérisation, fonction de l'initiateur mis en oeuvre, est généralement comprise entre 50°C et 100°C, de préférence entre 70 et 90°C.

La polymérisation peut être réalisée en continu, en discontinu ou semi-continu avec introduction d'une partie des monomères en continu et être du type "ensemencé" ou "incremental" selon toute variante connue pour l'obtention des particules de structure homogène et hétérogène.

Les PSA obtenus selon l'invention peuvent être enduits sur divers matériaux par enduction directe ou par transfert selon des méthodes conventionnelles d'enduction.

La présente invention a également pour objet l'utilisation d'un émulsifiant composé d'au moins un dérivé anionique ou non ionique d'un alcool gras en C₃ à C₁₈, linéaire ou ramifié, polyalkoxylé, tel que défini précédemment pour la préparation d'une émulsion aqueuse adhésive sensible à la pression (PSA) à base de polymères (méth)acryliques et possédant une résistance au cisaillement significativement augmentée.

Les exemples présentés ci-après à titre illustratif et non limitatif de la présente invention mettent en évidence d'autres avantages de celle-ci.

### EXEMPLE 1

On mélange dans un bécher, 900 g d'eau et une solution à base d'émulsifiant (79.2 g en matière sèche). Le mélange d'émulsifiant correspond à 60 % en poids de matière sèche d'un alcool lauryle éthoxylé sulfaté anionique possédant un indice d'éthoxylation de l'ordre de 50 et 40 % en poids de matière sèche d'un alcool lauryle éthoxylé avec un indice d'éthoxylation de l'ordre de 20. On ajoute à cette solution 2 832 grammes d'un acrylate 2-éthylhexyle, 28,6 grammes d'acide acrylique et 14,3 grammes de diméthacrylate de 1,3-butanediol. Ce mélange est émulsifié pendant 15 minutes avec un agitateur de type Rayneri® de manière à obtenir une émulsion stable. Dans un réacteur en verre de 6 litres on additionne à 1 200 grammes d'eau, 4 grammes (en matière sèche) de ce même mélange émulsifiant. La température est montée jusqu'à 75°C sous agitation. A 75°C, on ajoute à titre d'initiateur, une solution à base de 7 grammes de persulfate d'ammonium et de 30 grammes d'eau. Au même moment, on démarre l'alimentation en continu de l'émulsion de monomères et l'alimentation en continu de la solution en second initiateur (7 grammes de persulfate d'ammonium et 50 grammes d'eau) Ces ajouts sont accomplis en 210 minutes.

A la fin de l'introduction de l'émulsion en monomères, la température est portée à 80°C en 30 minutes et y est maintenue pendant 45 minutes. On refroidit ensuite le PSA et on le filtre.

### EXEMPLE 2

On prépare un second PSA selon le protocole décrit ci-dessus en exemple 1 dans lequel l'émulsifiant de l'exemple 1 est remplacé (poids par poids) par un mélange de 30 % en nonylphénol éthoxylé sulfaté anionique avec un indice d'éthoxylation de l'ordre de 20 et 70% en octylphénol éthoxylé non ionique avec un degré en indice d'éthoxylation de l'ordre de 7.5.

### EXEMPLE 3

Les PSA obtenus selon les exemples 1 et 2 sont neutralisés à un pH de l'ordre de 5. Leur résistance au cisaillement et leur adhésion par pelage sont appréciées à 23°C et à un taux d'humidité de 50 % à l'aide des tests suivants.
- La résistance au cisaillement est mesurée comme suit :
   Une surface de 2,5 cm x 2.5 cm de support enduit d'un adhésif (à raison de 20 grammes par mètre carré) est appliquée sur une plaque en verre qui est inclinée d'un angle de 2 degrés par rapport à la verticale. Un poids (1 kilo) est attaché au support et le temps écoulé entre le début du test et le moment où le poids chute, est retenu comme une mesure de la résistance au cisaillement (FINAT test FTM8).
- L'adhésion par pelage est appréciée en appliquant une bande d'adhésif d'une largeur de 25 millimètres sur un substrat (acier), et en pelant l'adhésif suivant un angle de 180° après un temps de pause de 3 minutes, 1 heure, 24 heures ou 72 heures. La vitesse de pelage est de 300 millimètres/minute (FINAT test FTM 1).

Ce test permet de quantifier la constance du pouvoir adhésif des adhésifs sensibles à la pression.

Les résultats obtenus avec les PSA des exemples 1 et 2 sont donnés dans le tableau 1 ci-après :

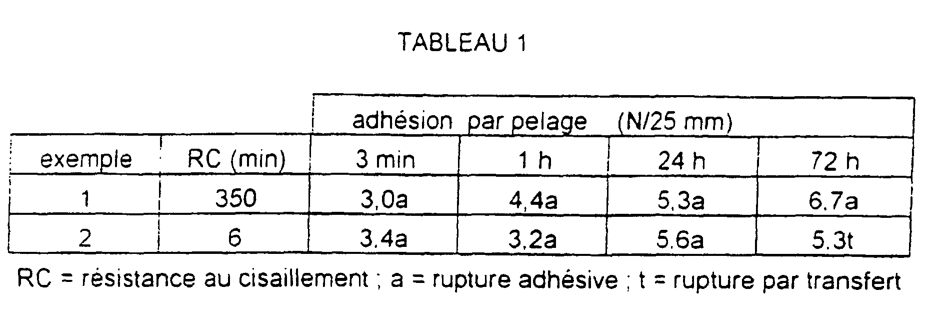

On note que les valeurs de pelage sont pratiquement égales mais que la résistance au cisaillement du PSA préparé en utilisant un émulsifiant à base d'alcools gras éthoxylés est significativement plus élevée que celles des PSA obtenus par mise en oeuvre d'alkylphénols éthoxylés. Elle est augmentée d'un facteur de l'ordre de 60.

### EXEMPLE 4

On mélange dans un bécher, 868 grammes d'eau et une solution d'un émulsifiant (93.5 grammes en matière sèche). L'émulsifiant comprend 60 % en poids sec d'un alcool lauryle éthoxylé sulfaté anionique avec un indice d'éthoxylation de l'ordre de 50 et 40 % en poids sec d'un alcool lauryle éthoxylé avec un indice d'éthoxylation de l'ordre de 20. On ajoute à cette solution 2 781 grammes d'acrylate de 2-éthylhexyle et 31,7 grammes d'acide acrylique. Ce mélange est émulsifié pendant 15 minutes avec un agitateur de type Rayneri® et pendant 90 secondes avec un agitateur de type Ultraturrax® de manière à obtenir une émulsion stable.

On chauffe dans un réacteur en verre de 6 litres, 802 grammes d'eau à une température comprise entre 60 et 70°C. On y ajoute 4,8 grammes (poids en matière sèche) du même émulsifiant et 30 grammes d'eau. La température est montée jusqu'à 75°C sous agitation. A 75°C, on y ajoute un initiateur (8 grammes de persulfate, 5 grammes d'eau) ainsi que 7,5 % en poids d'émulsion en monomères + 50 grammes d'eau. A la hauteur de l'exotherme, on démarre l'alimentation en continue de l'émulsion en monomères restante et l'alimentation en continue de la solution du second initiateur (7 grammes de persulfate d'ammonium et 110 grammes d'eau) qui sont poursuivies pendant 210 minutes. A la fin de l'introduction de l'émulsion en monomères, de l'eau supplémentaire est ajoutée pour rincer les tubes d'alimentation et les pompes La température est portée à 82°C et y est maintenue pendant 45 minutes. On refroidit ensuite le PSA et on le neutralise avec de l'ammoniac à un pH compris entre 4 et 4,8 et on le filtre.

### EXEMPLE 5

On prépare un second PSA, en suivant le protocole de l'exemple 4 dans lequel l'émulsifiant de l'exemple 1 est remplacé (poids par poids) par un mélange de 30 % en un nonylphénol éthoxylé sulfaté anionique avec un indice d'éthoxylation de l'ordre de 20 et 70 % d'un octylphénol éthoxylé non ionique avec un indice d'éthoxylation de l'ordre de 7.5.

### EXEMPLE 6

Les PSA des exemples 4 et 5 conduisent aux résultats présentés ci-après dans le tableau 2 qui sont similaires à ceux obtenus pour les PSA des exemples 1 et 2 mais pour lesquels les résultats sont mesurés sur une surface de 2 cm x 2 cm avec un poids de 1,5 kilos.

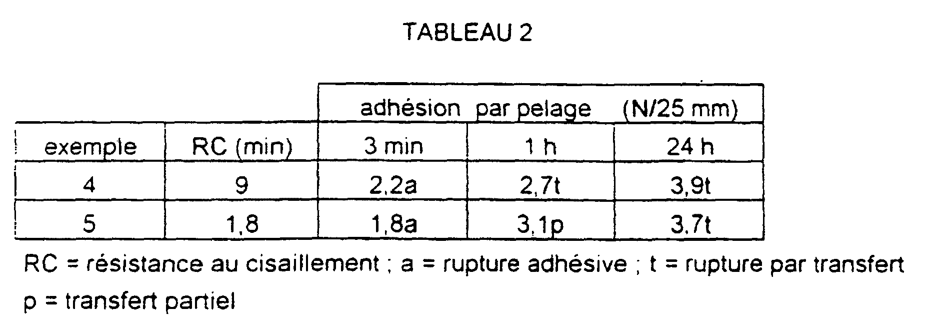

On note que les valeurs de pelage sont pratiquement équivalentes mais que la résistance au cisaillement avec l'émulsifiant conforme à l'invention est significativement plus élevée que celle du latex obtenu en présence d'alkylphénol éthoxylé. Elle est augmentée d'un facteur 5.

## Revendications

1. Utilisation de l'émulsion obtenue par polymérisation en émulsion aqueuse radicalaire de monomères comprenant des monomères (méth)acrylates d'alkyle présents à raison de 50 à environ 99 % en poids par rapport au poids en monomères présents dans l'émulsion, en présence d'au moins un émulsifiant composé d'au moins un dérivé non ionique ou an ionique d'un alcool gras, linéaire ou ramifié, polyalkoxylé;
à titre d'émulsion adhésive aqueuse sensible à la pression (PSA), possédant une résistance au cisaillement significativement augmentée,

2. Utilisation selon la revendication 1, **caractérisée en ce que** le dérivé d'alcool gras polyalkoxylé répond à la formule générale
CH₃-(CHR₁)ₙ-CH₂O-(CH₂-CH₂O)ₓ-R₂
avec
R₁ représentant un atome d'hydrogène ou un groupement alkyle en C₁ à C₄,
R₂ représentant un atome d'hydrogène ou un groupement SO₄M avec M représentant un métal alcalin et de préférence un atome de sodium,
n étant compris entre 1 et 16 et
x étant compris entre 10 et 100.

3. Utilisation selon la revendication 2, **caractérisée en ce que** R₁ est un atome d'hydrogène, n est compris entre 10 et 12 et x est compris entre 20 et 50.

4. Utilisation selon l'une des revendications 1 à 3, **caractérisée en ce que** l'émulsifiant est un mélange d'au moins deux dérivés d'alcool gras polyalkoxylés anionique(s) et/ou non ionique(s).

5. Utilisation selon l'une des revendications précédentes, **caractérisée en ce que** l'émulsifiant est composé de deux alcools lauryles polyéthoxylés avec des indices éthoxy respectivement de l'ordre de 20 et de 50, l'un se trouvant sous une forme sulfatée et l'autre non.

6. Utilisation selon l'une des revendications précédentes, **caractérisée en ce que** les monomères mis en oeuvre lors de la polymérisation radicalaire sont choisis dans le qroupe constitué de:
- l'acrylate de méthyle, l'acrylate d'éthyle, l'acrylate de propyle, l'acrylate de n-butyle, l'acrylate d'isobutyle, l'acrylate de 2-éthylehexyle, l'acrylate de tert-butyle, l'acrylate d'hexyle, l'acrylate d'heptyle, l'acrylate d'octyle, l'acrylate d'iso-octyle, l'acrylate de décyle, l'acrylate de dodécyle, le méthacrylate de méthyle, le méthacrylate d'éthyle, le méthacrylate de n-butyle, le méthacrylate d'isobutyle ;
- et leurs mélanges.

7. Utilisation selon l'une des revendications précédentes, **caractérisée en ce que** la polymérisation en émulsion met en oeuvre en outre au moins un monomère éthyléniquement insaturé, copolymérisable avec les monomères identifiés en revendication 6 et choisi dans le groupe, constitué par:
- les acides mono- et di- carboxyliques insaturés éthyléniques comme l'acide acrylique, l'acide méthacrylique, l'acide itaconique, l'acide maléique, l'acide fumarique et les mono- et di-alkylesters de ces acides mono- et di-carboxyliques avec les alcanols ayant de préférence 1 à 8 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides,
- les monomères éthyléniques comportant un groupe acide sulfonique et ses sels alcalins ou d'ammonium par exemple l'acide vinylsulfonique, l'acide vinylbenzènesulfonique, l'acide alpha-acrylamido méthylpropane-sulfonique, le 2-sulfoéthylène-méthacrylate,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou diméthylaminoéthyl-méthacrylate, le ditertiobutylaminoéthyl-acrylate ou le ditertiobutylaminoéthyl-méthacrylate, le diméthylaminométhyl-acrylamide ou diméthylaminométhyl-méthacrylamide,
- les monomères zwitterioniques comme par exemple l'acrylate de sulfopropyl(diméthyl)aminopropyle
- et leurs mélanges.

8. Utilisation selon l'une des revendications précédentes, **caractérisée en ce qu'**elle met en oeuvre en outre au moins un monomère portant au moins deux groupements réactifs en polymérisation radicalaire.

9. Utilisation selon l'une des revendications précédentes, **caractérisée en ce que** l'émulsifiant est mis en oeuvre à raison d'environ 1 à 10 % en poids de matière sèche du poids total en monomères.

10. Utilisation selon la revendication 9, **caractérisée en ce que** l'émulsifiant est présent à raison d'environ 2 à environ 5 % en poids de matière sèche du poids total en monomères.

11. Utilisation selon l'une des revendications précédentes, **caractérisée en ce que** la polymérisation en émulsion des monomères est réalisée en présence d'au moins un initiateur radicalaire et, le cas échéant, d'un agent de transfert, avec une concentration en monomères comprise entre environ 20 et 75 % en poids de l'émulsion.

12. Procédé pour préparer une émulsion telle que définie dans l'une quelconque des revendications 1 à 11, **caractérisé en ce que** l'émulsifiant est un mélange d'au moins deux dérivés d'alcool gras polyalkoxylés anionique(s) et/ou non ionique(s).

13. Procédé selon la revendication 12, **caractérisé en ce que** l'émulsifiant est composé de deux alcools lauryles polyéthoxylés avec des indices éthoxy respectivement de l'ordre de 20 et de 50, l'un se trouvant sous une forme sulfatée et l'autre non.

## Claims

1. Use of the emulsion obtained by free-radical aqueous emulsion polymerization of monomers including alkyl (meth)acrylate monomers in a proportion of from 50% to approximately 99% by weight, relative to the weight of monomers present in the emulsion, in the presence of at least one emulsifier composed of at least one nonionic or anionic derivative of a linear or branched fatty alcohol which is polyalkoxylated, as an aqueous pressure-sensitive adhesive (PSA) emulsion which possesses a significantly enhanced shear strength.

2. Use according to Claim 1, **characterized in that** the polyalkoxylated fatty alcohol derivative is of the general formula
CH₃-(CHR₁)ₙ-CH₂O-(CH₂-CH₂O)ₓ-R₂
where
R₁ represents a hydrogen atom or a C₁ to C₄ alkyl group,
R₂ represents a hydrogen atom or a group SO₄M in which M represents an alkali metal and preferably a sodium atom,
n is between 1 and 16 and
x is between 10 and 100.

3. Use according to Claim 2, **characterized in that** R₁ is a hydrogen atom, n is between 10 and 12 and x is between 20 and 50.

4. Use according to one of Claims 1 to 3, **characterized in that** the emulsifier is a mixture of at least two polyalkoxylated derivatives of fatty alcohol which is or are anionic and/or nonionic.

5. Use according to one of the preceding claims, **characterized in that** the emulsifier is composed of two polyethoxylated lauryl alcohols with ethoxy indices respectively of the order of 20 and of 50, one being in sulphated form and the other not.

6. Use according to one of the preceding claims, **characterized in that** the monomers employed in the free-radical polymerization are selected from the group consisting of:
- methyl acrylate, ethyl acrylate, propyl acrylate, n-butyl acrylate, isobutyl acrylate, 2-ethylhexyl acrylate, tert-butyl acrylate, hexyl acrylate, heptyl acrylate, octyl acrylate, isooctyl acrylate, decyl acrylate, dodecyl acrylate, methyl methacrylate, ethyl methacrylate, n-butyl methacrylate, isobutyl methacrylate;
- and mixtures thereof.

7. Use according to one of the preceding claims, **characterized in that** the emulsion polymerization further employs at least one ethylenically unsaturated monomer which is copolymerizable with the monomers identified in Claim 6 and is selected from the group consisting of:
- ethylenic unsaturated monocarboxylic and dicarboxylic acids such as acrylic acid, methacrylic acid, itaconic acid, maleic acid, fumaric acid and the monoalkyl and dialkyl.esters of these monocarboxylic and dicarboxylic acids with alkanols having preferably 1 to 8 carbon atoms and their N-substituted derivatives,
- amides of unsaturated carboxylic acids, such as acrylamide, methacrylamide, N-methylolacrylamide or methacrylamide and N-alkylacrylamides,
- ethylenic monomers containing a sulphonic acid group and its alkali metal or ammonium salts, for example vinylsulphonic acid, vinylbenzenesulphonic acid, alpha-acrylamidomethylpropanesulphonic acid and 2-sulphoethylene methacrylate,
- unsaturated ethylenic monomers containing a secondary, tertiary or quaternary amino group or a heterocyclic group containing nitrogen, such as, for example, vinylpyridines, vinylimidazole, aminoalkyl (meth)acrylates and aminoalkyl(meth)-acrylamides such as dimethylaminoethyl acrylate or dimethylaminoethyl methacrylate, di-tert-butylaminoethyl acrylate or di-tert-butylaminoethyl methacrylate, dimethylaminomethylacrylamide or dimethylaminomethylmethacrylamide,
- zwitterionic monomers such as, for example, sulphopropyl(dimethyl)aminopropyl acrylate,
- and mixtures thereof.

8. Use according to one of the preceding claims, **characterized in that** it further employs at least one monomer carrying at least two groups which are reactive in free-radical polymerization.

9. Use according to one of the preceding claims, **characterized in that** the emulsifier is employed in a proportion of approximately 1% to 10% by weight of solids of the total weight of monomers.

10. Use according to Claim 9, **characterized in that** the emulsifier is present in a proportion of approximately 2% to approximately 5% by weight of solids of the total weight of monomers.

11. Use according to one of the preceding claims, **characterized in that** the emulsion polymerization of the monomers is performed in the presence of at least one free-radical initiator and where appropriate a transfer agent, with a monomer concentration of between approximately 20% and 75% by weight of the emulsion.

12. Process for preparing an emulsion as defined in any one of Claims 1 to 11, **characterized in that** the emulsifier is a mixture of at least two polyalkoxylated derivatives of fatty alcohol which is or are anionic and/or nonionic.

13. Process according to Claim 12, **characterized in that** the emulsifier is composed of two polyethoxylated lauryl alcohols with ethoxy indices respectively of the order of 20 and of 50, one being in sulphated form and the other not.

## Patentansprüche

1. Verwendung einer Emulsion, erhalten durch radikalische Polymerisation in wässriger Emulsion von Monomeren, umfassend monomere Alkyl-(meth)acrylate, die in einer Menge von 50 bis etwa 99 Gew.-%, bezogen auf das Gewicht der in der Emulsion vorliegenden Monomeren, vorhanden sind, in Gegenwart von zumindest einer emulgierenden Verbindung zumindest eines nicht-ionischen oder anionischen Derivats eines polyalkoxylierten linearen oder verzweigten Fettalkohols;
als druckempfindliche wässrige adhäsive Emulsion (PSA) mit einer beträchtlich erhöhten Scherbeständigkeit.

2. Verwendung gemäß Anspruch 1, **dadurch gekennzeichnet, dass** das polyalkoxylierte Fettalkoholderivat die allgemeine Formel
CH₃-(CHR₁)ₙ-CH₂O-(CH₂-CH₂O)ₓ-R₂ besitzt
worin
R₁ ein Wasserstoffatom oder eine C₁-C₄ Alkylgruppe bedeutet,
R₂ ein Wasserstoffatom oder eine Gruppe SO₄M bedeutet, wobei M für ein Alkalimetall, vorzugsweise ein Natriumatom, steht,
n zwischen 1 und 16 beträgt und
x zwischen 10 und 100 beträgt.

3. Verwendung gemäß Anspruch 2, **dadurch gekennzeichnet, dass** R₁ ein Wasserstoffatom ist, n zwischen 10 und 12 liegt und x zwischen 20 und 50 liegt.

4. Verwendung gemäß einem der Ansprüche 1 bis 3, **dadurch gekennzeichnet, dass** das Emulgiermittel eine Mischung von zumindest zwei anionischen und/oder nicht ionischen Fettalkoholderivaten ist.

5. Verwendung gemäß einem der vorhergehenden Ansprüche, **dadurch gekennzeichnet, dass** das Emulgiermittel aus zwei polyethoxylierten Laurylalkoholen mit Ethoxy-Indices in der Größenordnung von 20 bzw. 50 besteht, wobei der eine in sulfatierter Form und der andere in nicht sulfatierter Form vorliegt.

6. Verwendung gemäß einem der vorhergehenden Ansprüche, **dadurch gekennzeichnet, dass** die bei der radikalischen Polymerisation eingesetzten Monomeren ausgewählt werden unter der folgenden Gruppe:
- Methylacrylat; Ethylacrylat, Propylacrylat, n-Butylacrylat, Isobutylacrylat, 2-Ethylhexylacrylat, tert.-Butylacrylat, Hexylacrylat, Heptylacrylat, Octylacrylat, Isooctylacrylat, Decylacrylat, Dodecylacrylat, Methylmethacrylat, Ethylmethacrylat, n-Butylmethacrylat, Isobutylmethacrylat,:
- und deren Mischungen.

7. Verwendung gemäß einem der vorhergehenden Ansprüche, **dadurch gekennzeichnet, dass** bei der Polymerisation in Emulsion außerdem wenigstens ein ethylenisch ungesättigtes Monomeres, das mit den in Anspruch 6 angegebenen Monomeren copolymerisierbar ist, und aus der folgenden Gruppe ausgewählt wird, eingesetzt wird:
- den ethylenisch ungesättigten Mono- und Dicarbonsäuren, wie Acrylsäure, Methacrylsäure, Itaconsäure, Maleinsäure, Fumarsäure und den Mono- und Dialkylestern dieser Mono- und Dicarbonsäuren mit Alkanolen mit vorzugsweise 1 bis 8 Kohlenstoffatomen und deren N-substituierten Derivaten,
- den Amiden der ungesättigten Carbonsäuren, wie Acrylamid, Methacrylamid, N-Methylolacrylamid oder Methacrylamid, den N-Alkylacrylamiden,
- den eine Sulfonsäuregruppe aufweisenden ethylenischen Monomeren und ihren Alkali- oder Ammoniumsalzen, zum Beispiel Vinylsulfonsäure, Vinylbenzolsulfonsäure, Alphaacrylamidomethylpropansulfonsäure, 2-Sulfoethylenmethacrylat,
- den ethylenisch ungesättigten Monomeren mit einer sekundären, tertiären oder quatemären Aminogruppe oder einer Stickstoff enthaltenden heterocyclischen Gruppe, wie z.B. den Vinylpyridinen, Vinylimidazol, den Aminoalkyl-(meth)acrylaten und den Aminoalkyl-(meth)acrylamiden, wie Dimethylaminoethylacrylat oder Dimethylaminoethylmethacrylat, Di-tert-butylaminoethylacrylat oder Di-tert.butylaminoethylmethacrylat, Dimethylaminomethylacrylamid oder Dimethylaminomethylmethacrylamid,
- den zwitterionischen Monomeren, wie zum Beispiel Sulfopropyl-(dimethyl)-aminopropyl-acrylat,
- und deren Mischungen.

8. Verwendung gemäß einem der vorhergehenden Ansprüche, **dadurch gekennzeichnet, dass** außerdem wenigstens ein Monomeres eingesetzt wird, das zumindest zwei bei der radikalischen Polymerisation reaktive Gruppen aufweist.

9. Verwendung gemäß einem der vorhergehenden Ansprüche, **dadurch gekennzeichnet, dass** das Emulgiermittel in einer Menge von etwa 1 bis 10 %, ausgedrückt als Trockengewicht des Gesamtgewichts der Monomeren, eingesetzt wird.

10. Verwendung gemäß Anspruch 9, **dadurch gekennzeichnet, dass** das Emulgiermittel in einer Menge von etwa 2 bis etwa 5 %, ausgedrückt als Trockengewicht des Gesamtgewichts der Monomeren, eingesetzt wird.

11. Verwendung gemäß einem der vorhergehenden Ansprüche, **dadurch gekennzeichnet, dass** die Emulsionspolymerisation der Monomeren in Gegenwart zumindest eines Radikale bildenden Initiators und gegebenenfalls eines Transfermittels mit einer Monomerenkonzentration zwischen etwa 20 und 75%, bezogen auf Gewicht der Emulsion, durchgeführt wird.

12. Verfahren zur Herstellung einer Emulsion, wie in einem der Ansprüche 1 bis 11 definiert, **dadurch gekennzeichnet, dass** das Emulgiermittel eine Mischung von zumindest zwei anionischen und/oder nicht-ionischen polyalkoxylierten Fettalkoholderivaten ist.

13. Verwendung gemäß Anspruch 12, **dadurch gekennzeichnet, dass** das Emulgiermittel aus zwei polyethoxylierten Laurylalkoholen mit Ethoxyindices in der Größenordnung von 20 bzw. 50 besteht, wobei der eine in sulfatierter Form vorliegt und der andere in nicht sulfatierter.
